# EUROPÄISCHE PATENTSCHRIFT

(11) **EP 3 032 505 B1**
(45) Veröffentlichungstag und Bekanntmachung des Hinweises auf die Patenterteilung: **21.07.2021**
(21) Anmeldenummer: 14197316.4
(22) Anmeldetag: 11.12.2014
(51) Int. Cl.: G07F 17/00, G06Q 30/02, G06Q 20/40, G06Q 30/06, G07B 15/00

(54) **Verfahren zum Betreiben von Bezahlautomaten eines ID-basierten Zugangskontrollsystems für ein Post-Payment-Szenario**
Method for operating payment machines of an ID-based access control system for a post-payment scenario
Procédé de fonctionnement de terminaux de paiement d'un système de contrôle d'accès ID pour un scénario d'après paiement

(43) Veröffentlichungstag der Anmeldung: 15.06.2016
(73) Patentinhaber: SKIDATA AG, 5083 Grödig/Salzburg (AT)
(72) Erfinder: Dr. Kerschbaumer, Andreas, 9020 Klagenfurt (AT)
(74) Vertreter: Karakatsanis, Georgios

(56) Entgegenhaltungen:
- WO-A1-2010/027318
- DE-A1-102006 016 050
- US-A1- 2012 130 775
- US-A1- 2012 274 482

## Beschreibung

Die vorliegende Erfindung bezieht sich auf ein Verfahren zum Betreiben von Bezahlautomaten eines ID-basierten Zugangskontrollsystems für ein Post-Payment-Szenario, bei dem beim Verlassen des vom Zugangskontrollsystem abgedeckten Gebietes die entsprechenden Gebühren zu entrichten sind, gemäß dem Oberbegriff des Patentanspruchs 1.

ID-basierte Zugangskontrollsysteme verwenden die ID eines Kundenmediums, wobei durch Zugangskontrollvorrichtungen des Zugangskontrollsystems die ID des Kundenmediums ausgelesen und an einen zentralen Server weitergeleitet wird, welcher anhand der ID den Zugang über die die ID übermittelnde Zugangskontrollvorrichtung gewährt oder verweigert. Das Kundenmedium kann beispielsweise als RFID-Tag, RFID-Karte, als Papierticket mit maschinenlesbaren Informationen, oder als elektronisches Ticket mit einem ein- oder zweidimensionalen Barcode ausgeführt sein.

ID-basierte Zugangskontrollsysteme weisen im Gegensatz zu den sogenannten Medium-basierten Zugangskontrollsystemen, bei denen der Zugang anhand der auf einem Medium abgelegten Information gewährt oder verweigert wird, ohne einen zentralen Server zu kontaktieren, den Vorteil auf, dass eine hohe Flexibilität und Skalierung gewährleistet wird. Einer ID eines Kundenmediums können mehrere Arten von Zugangsberechtigungen beispielsweise für unterschiedliche Bereiche und unterschiedliche Zeiten und unterschiedliche Betreiber zugeordnet werden, was insbesondere bei Skigebieten von Vorteil ist. Dies ist bei Medium-basierten Zugangskontrollsystemen nicht ohne weiteres möglich, da die Speicherkapazität eines Kundenmediums begrenzt ist, so dass Informationen bezüglich mehrerer Zugangsberechtigungen nicht ohne weiteres abgelegt werden können.

ID-basierte Zugangskontrollsysteme weisen jedoch den Nachteil auf, dass der zentrale Server sowie die Zugangskontrollvorrichtungen und die Bezahlautomaten über ein Netzwerk zum Zweck der Datenkommunikation miteinander verbunden sein müssen. Wenn eine Zugangskontrollvorrichtung, ein Bezahlautomat oder der
zentrale Server offline sind, entsteht die Notwendigkeit den Betrieb des Zugangskontrollsystems dennoch aufrecht zu erhalten.

Bei ID-basierten Zugangskontrollsystemen mit einem Post-Payment-Szenario, d.h. bei Zugangskontrollsystemen, bei denen beim Verlassen des vom Zugangskontrollsystem abgedeckten Gebietes die entsprechenden Gebühren zu entrichten sind, müssen sämtliche Komponenten online sein, damit eine ordnungsgemäße Funktionsweise gewährleistet ist. Beispielsweise ist zur Kalkulation der zu zahlenden Gebühr neben einer Gebühren- und Tariftabelle auch die Kenntnis der Zugangsgeschichte eines Kundenmediums erforderlich.

Eine Möglichkeit die Kenntnis der Zugangsgeschichte eines Kundenmediums für den Fall, dass ein Bezahlautomat offline ist zu gewährleisten, besteht darin, offline-Datensätze zu verwenden, die auf dem Kundenmedium abgelegt sind und die Zugangsgeschichte des Kundenmediums wiedergeben. Zu diesem Zweck müssen jedoch ausschließlich Kundenmedien verwendet werden, die beschreibbar ausgeführt sind. In nachteiliger Weise sind jedoch viele Arten von Kundenmedien bekannt, die in der Regel nicht beschreibbar ausgeführt sind, wie beispielsweise Kreditkarten, nicht beschreibbare RFID-Tags oder Barcodes.

Der vorliegenden Erfindung liegt die Aufgabe zugrunde, ein Verfahren zum Betreiben von Bezahlautomaten eines ID-basierten Zugangskontrollsystems für ein Post-Payment-Szenario, bei dem beim Verlassen des vom Zugangskontrollsystem abgedeckten Gebietes die entsprechenden Gebühren zu entrichten sind, anzugeben, durch dessen Durchführung eine Berechnung der zu zahlenden Gebühr ohne ein Kundenmedium mit Daten zu beschreiben auch dann gewährleistet ist, wenn ein Bezahlautomat offline ist. Hierbei soll eine möglichst geringe Datenmenge im Netzwerk des Zugangskontrollsystems transferiert werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zum Betreiben von Bezahlautomaten eines ID-basierten Zugangskontrollsystems für ein Post-Payment-Szenario, bei dem beim Verlassen des vom Zugangskontrollsystem abgedeckten Gebietes die entsprechenden Gebühren zu entrichten sind, vorgeschlagen, im Rahmen dessen jeder Bezahlautomat des Zugangskontrollsystems einer Zone des Zugangskontrollsystems zugeordnet ist, wobei jede Zone eine eineindeutige Zonen-ID aufweist. Eine Zone kann beispielsweise das gesamte vom Zugangskontrollsystem gedeckte Gebiet sein oder ein einzelner Bereich des vom
Zugangskontrollsystem abgedeckten Gebietes. Beispielsweise für den Fall eines Skigebietes kann eine Zone durch die Skipisten, eine weitere Zone durch den Parkplatz des Skigebietes und eine weitere Zone durch eine Spa-Einrichtung gebildet werden.

Das Zugangskontrollsystem weist einen zentralen Server sowie zumindest eine Zugangskontrollvorrichtung, über die IDs von Kundenmedien ausgelesen und an den zentralen Server weitergeleitet werden, welcher anhand der ID den Zugang über die die ID übermittelnde Zugangskontrollvorrichtung gewährt oder verweigert, auf, wobei jede Zugangskontrollvorrichtung des Zugangskontrollsystems einer Zone zugeordnet ist.

Gemäß der Erfindung wird zu Beginn der Durchführung des Verfahrens für jede Zone ein im zentralen Server erstellter Anwesenheitsdatensatz über einen oder mehrere Proxy-Server an die Bezahlautomaten jeder Zone weitergeleitet und in den Bezahlautomaten gespeichert, wobei anschließend in vorgegebenen, definierbaren Zeitabständen oder wenn die im zentralen Server erfassten Delta-Veränderungen in einer Zone eine vorgegebene Schwelle für die hinzugekommenen Kundenmedien und/oder für die nicht mehr anwesenden Kundenmedien überschreiten, eine Datei enthaltend die Delta-Veränderungen, nämlich die IDs der Kundenmedien, die sich nicht mehr in der Zone befinden und die IDs der Kundenmedien, die hinzugekommen sind, zum Update des in den Bezahlautomaten gespeicherten Anwesenheitsdatensatzes über einen oder mehrere Proxy-Server an die Bezahlautomaten jeder Zone übertragen wird.

Der Anwesenheitsdatensatz jeder Zone weist als Parameter die Zonen-ID, die IDs der sich in der Zone befindlichen Kundenmedien, den Zeitpunkt der ersten Erfassung eines Kundenmediums in dieser Zone und/oder eine Dienstleistungs-ID (beispielsweise eine ID die der Dienstleistung Skifahren oder Wellness zugeordnet ist) auf. Für den Fall, dass lediglich eine Zone vorgesehen ist, entfällt die Zonen-ID, wobei wenn nur eine Dienstleistung angeboten wird, auch die Dienstleistungs-ID entfällt. Die Anwesenheit eines Kundenmediums in einer Zone bzw. der Zeitpunkt der ersten Erfassung eines Kundenmediums in einer Zone wird anhand der von der zumindest einen Zugangskontrollvorrichtung des Zugangskontrollsystems in dieser Zone gelieferten Informationen ermittelt.

Wenn ein Bezahlautomat in einer Zone oder der zentrale Server zu einem Zeitpunkt offline ist, d.h. wenn keine Verbindung zur Datenkommunikation zwischen dem zentralen Server und dem Bezahlautomaten hergestellt ist, wird vom offline Bezahlautomaten der zuletzt mittels der Delta-Veränderungen upgedatete Anwesenheitsdatensatz dieser Zone herangezogen, um anhand der darin enthaltenen Daten und der im Bezahlautomaten gespeicherten Gebühren- und Tarifinformationen den zu entrichtenden Betrag zu berechnen. Anschließend wird der Bezahlvorgang durchgeführt, wobei, wenn der Bezahlautomat sich zu einem späteren Zeitpunkt in einem online-Modus befindet, d.h. wenn eine Verbindung zur Datenkommunikation zwischen dem zentralen Server und dem Bezahlautomaten hergestellt ist, die Daten der offline-Transaktionen zum Zweck der Synchronisierung an den zentralen Server übermittelt werden. Wenn der Bezahlautomat online ist werden die zu entrichtenden Gebühren anhand der im zentralen Server gespeicherten Daten berechnet.

Der zur Initialisierung erforderliche Anwesenheitsdatensatz sowie die Delta-Veränderungen des Anwesenheitsdatensatzes können vorzugsweise über zumindest einen aktiven lokalen oder entfernten Proxy-Server oder über zumindest einen passiven lokalen oder entfernten Proxy-Server an die Bezahlautomaten weitergeleitet werden.

Ferner kann in vorgegebenen zeitlichen Abständen oder nach Anforderung seitens der Bezahlautomaten eine Re-Initialisierung durchgeführt werden, wobei der aktuelle Anwesenheitsdatensatz erneut an die Bezahlautomaten übermittelt wird.

Die Erfindung wird im Folgenden anhand der beigefügten Figuren beispielhaft näher erläutert. Es zeigen:
- Figur 1:: eine schematische Darstellung eines Zugangskontrollsystems zur Veranschaulichung der für die Durchführung des Systems erforderlichen Datenflüsse;
- Figur 2:: ein Sequenzdiagramm zur Veranschaulichung der Verwendung eines aktiven lokalen Proxy-Servers zur Durchführung des erfindungsgemäßen Verfahrens;
- Figur 3:: ein Sequenzdiagramm zur Veranschaulichung der Verwendung eines passiven lokalen Proxy-Servers zur Durchführung des erfindungsgemäßen Verfahrens; und
- Figur 4:: ein Sequenzdiagramm zur Veranschaulichung der Schritte einer offline-Bezahlung gemäß der Erfindung.

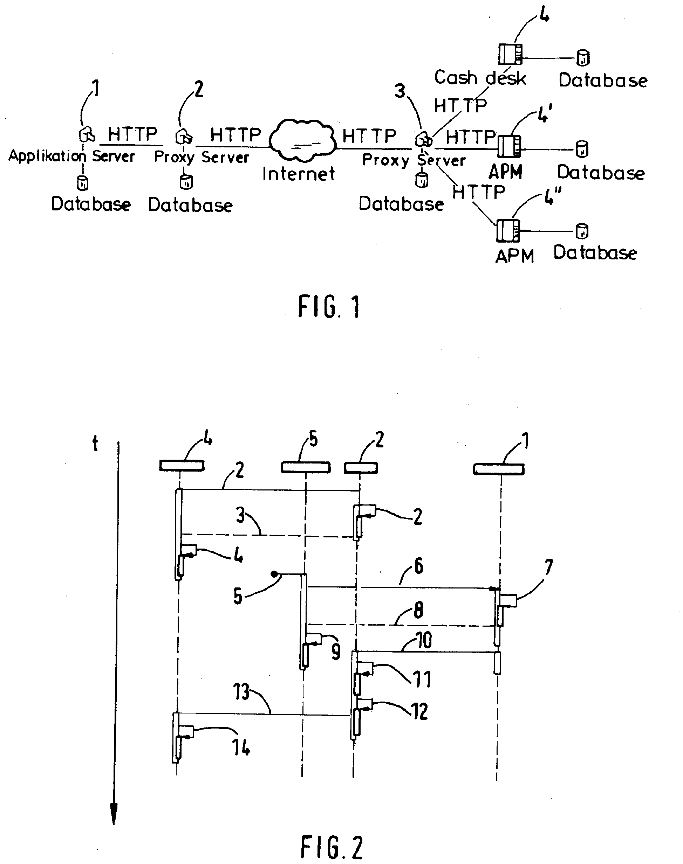

Gemäß der Erfindung und bezugnehmend auf Figur 1 umfasst ein Zugangskontrollsystem einen zentralen Server 1, zumindest eine nicht dargestellte Zugangskontrollvorrichtung und zumindest einen Bezahlautomaten 4, 4', 4", wobei jeder Bezahlautomat 4, 4', 4" des Zugangskontrollsystems einer Zone des Zugangskontrollsystems zugeordnet ist, wobei jede Zone eine eineindeutige Zonen-ID aufweist. Die Bezahlautomaten 4, 4', 4" sind im normalen Betrieb mit dem zentralen Server 1 zum Zweck der Datenkommunikation verbunden. Der zentrale Server 1 sowie die Bezahlautomaten 4, 4', 4" können auf jeweils eine Datenbank zugreifen.

Gemäß der Erfindung wird im zentralen Server 1 für jede Zone ein Anwesenheitsdatensatz erstellt, welcher zur Initialisierung des Verfahrens über zumindest einen aktiven oder passiven Proxy-Server 2, 3 an die Bezahlautomaten 4, 4 , 4" der jeweiligen Zone übermittelt und in den Bezahlautomaten 4, 4', 4" gespeichert wird. Nach der Initialisierung wird in vorgegebenen, definierten zeitlichen Abständen vom zentralen Server eine Datei enthaltend die Delta-Veränderungen, nämlich die IDs der Kundenmedien, die seit dem letzten Update sich nicht mehr in einer Zone befinden und die IDs der Kundenmedien, die in diesem Zeitintervall in dieser Zone hinzugekommen sind, zum Update des in den Bezahlautomaten gespeicherten Anwesenheitsdatensatzes über einen oder mehrere Proxy-Server an die Bezahlautomaten jeder Zone übertragen.

Bei dem in Figur 1 gezeigten Beispiel erfolgt die Kommunikation zwischen dem Bezahlautomaten 4, 4', 4"dem zumindest einen Proxy-Server 2, 3 und dem zentralen Server 1 über das HTTP-Protokoll.

Die Proxy-Server 2, 3 weisen jeweils eine lokale Datenbank auf, in der der Anwesenheitsdatensatz sowie die vom zentralen Server 1 übermittelten Delta-Veränderungen gecached bzw. zwischengespeichert werden. Die den Bezahlautomaten 4, 4', 4" zugeordneten lokalen Datenbanken werden zum Cachen des Anwesenheitsdatensatzes und der Delta-Veränderungen sowie von Gebühren- und Tarifinformationen verwendet.

Die Proxy-Server können als aktive oder passive lokale, d.h. im Gebiet der Bezahlautomaten vorgesehene oder entfernte Proxy-Server ausgeführt sein.

Bei dem in Figur 2 gezeigten Beispiel wird ein Proxy-Server verwendet, der als aktiver Proxy-Server ausgeführt ist.

Ein aktiver Proxy-Server im Sinne der Erfindung ist ein Proxy-Server, welcher ohne Steuerbefehle, die von einem Bezahlautomaten generiert worden sind, in vorgegebenen oder definierbaren Abständen eine Verbindung zum zentralen Server 1 aufbaut, um den Anwesenheitsdatensatz bzw. die Datei enthaltend die Delta-Veränderungen anzufordern, zwischen zu speichern und an die Bezahlautomaten zu übermitteln.

Bezugnehmend auf Figur 2 wird zu Beginn des Verfahrens eine Anmeldung der Bezahlautomaten 4 beim aktiven Proxy-Server 2, welcher entfernt oder lokal vorgesehen sein kann, durchgeführt (Schritt 1). Anschließend (Schritt 2) wird der aktuelle Anwesenheitsdatensatz, der vom zentralen Server 1 an den Proxy-Server 2 übermittelt worden ist vom Zwischenspeicher des Proxy-Servers 2 aufgerufen und an den Verkaufsautomaten 4 übermittelt (Schritt 3), wobei der Verkaufsautomat 4 den Anwesenheitsdatensatz zwischenspeichert (Schritt 4).

Wenn zu einem späteren Zeitpunkt ein Kundenmedium von einer Zugangskontrollvorrichtung 5 in einer Zone erfasst wird, wird die ID des Kundenmediums ausgelesen und an den zentralen Server übermittelt (Schritte 5, 6), wobei die Transaktionsdaten der Zugangskontrolle im zentralen Server 1 gespeichert werden (Schritt 7). Somit wird die Zugangsgeschichte des Kundenmediums in dieser Zone gespeichert.

Anschließend wird an die Zugangskontrollvorrichtung 5 die Information übermittelt "Zugang gewähren" (Schritt 8), wobei in einem nächsten Schritt ein Sperrorgan der Zugangskontrollvorrichtung 5 im Öffnungssinne betätigt wird, um den Zugang zu gewähren (Schritt 9).

Zu einem späteren Zeitpunkt wird im zentralen Server 1 eine Datei mit den Delta-Veränderungen des Anwesenheitsdatensatzes anhand der Daten der Zugangskontrollvorrichtungen und der Daten der Bezahlautomaten erstellt. Die neu hinzugekommenen Kundenmedien in dieser Zone werden von den Zugangskontrollvorrichtungen 5 erfasst, wobei die nicht mehr in dieser Zone anwesenden Kundenmedien anhand der Transaktionsdaten der Bezahlautomaten erfasst werden (Schritt 10). In einem nächsten Schritt wird die Datei der Delta-Veränderungen an den Proxy-Server 2 übermittelt, welcher sie zwischenspeichert und an die Bezahlautomaten 4 übermittelt (Schritte 11, 12, 13). Diese Datei wird in den Datenbanken der jeweiligen Bezahlautomaten gespeichert und zum Update des in den Bezahlautomaten gespeicherten Anwesenheitsdatensatzes herangezogen (Schritt 14). Die Erstellung der Datei der Delta-Veränderungen kann in regelmäßigen, vorgegebenen Abständen erstellt und übermittelt werden. Alternativ kann die Datei enthaltend die Delta-Veränderungen erstellt werden, wenn die im zentralen Server erfassten Delta-Veränderungen eine vorgegebene Schwelle für die hinzugekommenen Kundenmedien und/oder für die nicht mehr anwesenden Kundenmedien überschreiten.

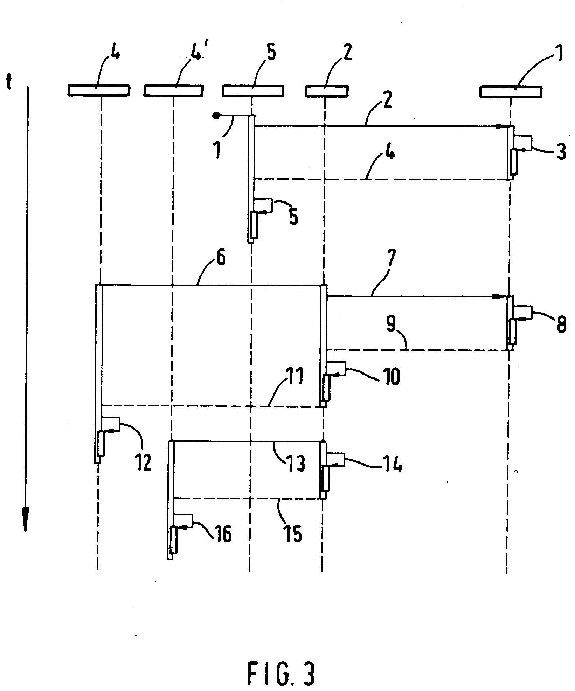

Gegenstand der Figur 3 ist eine Variante des erfindungsgemäßen Verfahrens, bei der ein passiver Proxy-Server verwendet wird. Ein passiver Proxy-Server im Sinne der Erfindung ist ein Proxy-Server, welcher den Anwesenheitsdatensatz und die Datei enthaltend die Delta-Veränderungen nach entsprechender Aufforderung seitens der Bezahlautomaten an den jeweiligen Bezahlautomaten übermittelt, jedoch jeweils lediglich einmal vom zentralen Server empfängt.

Bezugnehmend auf Figur 3 wird bei der Erfassung eines Kundenmediums von einer Zugangskontrollvorrichtung 5 einer Zone die ID des Kundenmediums ausgelesen und an den zentralen Server 1 übermittelt (Schritte 1, 2), wobei die Transaktionsdaten der Zugangskontrolle im zentralen Server 1 gespeichert werden, wodurch die Zugangsgeschichte des Mediums erfasst wird (Schritt 3). Anschließend wird bei gültiger Zugangsberechtigung an die Zugangskontrollvorrichtung 5 die Information "Zugang gewähren" übermittelt und ein Sperrorgan der Zugangskontrollvorrichtung im Öffnungssinne betätigt (Schritte 4, 5).

Bei dem gezeigten Beispiel wird angenommen, dass die zur Initialisierung des Verfahrens erforderliche Übermittlung des vollständigen Anwesenheitsdatensatzes über den Proxy-Server bereits erfolgt ist.

Gemäß der Erfindung werden von den Bezahlautomaten 4, 4' in vorgegebenen, definierbaren zeitlichen Intervallen die Datei enthaltend die Delta-Veränderungen vom Proxy-Server 2 angefordert, wobei diese Intervalle für alle Bezahlautomaten einer Zone gleich sind und die Dateien enthaltend die Delta-Veränderungen für jedes Intervall in einer Zone eine eindeutige Bezeichnung aufweisen.

Wenn, bezugnehmend auf Figur 3, die Datei enthaltend die Delta-Veränderungen für ein vorgegebenes Intervall zum ersten Mal von einem Bezahlautomaten 4 angefordert wird (Schritt 6), wird die Anfrage vom passiven Proxy-Server 2 an den zentralen Server 1 weitergeleitet (Schritt 7), wobei anschließend der zentrale Server 1 die Datei enthaltend die Delta-Veränderungen erstellt (Schritt 8) und an den Proxy-Server 2 übermittelt (Schritt 9).

In einem nächsten Schritt wird die Datei enthaltend die Delta-Veränderungen im Proxy-Server 2 gespeichert und an den Bezahlautomaten 4 übermittelt (Schritt 11), wo sie gespeichert wird (Schritt 12). Wenn anschließend die Datei enthaltend die Delta-Veränderungen für dasselbe zeitliche Intervall von einem weiteren Bezahlautomaten 4' in derselben Zone angefordert wird (Schritt 13), wird die bereits im Proxy-Server 2 gespeicherte Datei für dieses Intervall aufgerufen (Schritt 14) und an den Bezahlautomaten 4' übermittelt (Schritt 15), wo sie gespeichert wird (Schritt 16). In vorteilhafter Weise wird die Datei enthaltend die Delta-Veränderungen für jedes Intervall lediglich einmal vom zentralen Server an den Proxy-Server übermittelt, wobei sämtliche Bezahlautomaten 4, 4' diese Datei vom passiven Proxy-Server 2 anfordern können. Vorzugsweise ist der passive Proxy-Server 2 lokal installiert, d.h. im Gebiet, welches vom Zugangskontrollsystem abgedeckt wird.

Gemäß der Erfindung können mehrere Proxy-Server verwendet werden, die kaskadiert angeordnet sind.

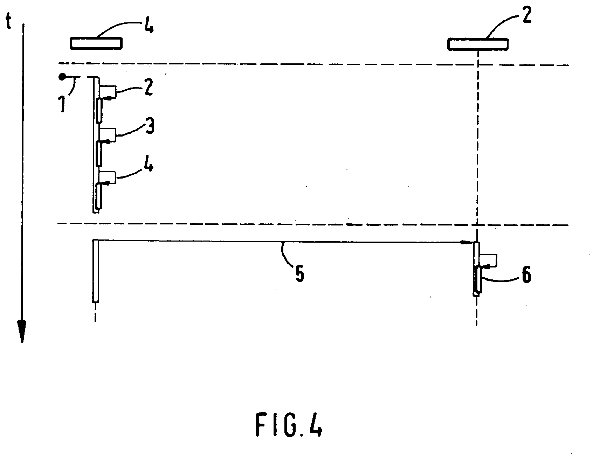

Gegenstand der Figur 4 ist die erfindungsgemäße Durchführung eines Bezahlvorgangs für den Fall, dass ein Bezahlautomat 4 offline ist. Hierbei wird nach der Erfassung eines Kundenmediums (Schritt 1) zur Berechnung der zu zahlenden Gebühr der in der Datenbank des Bezahlautomaten 4 gespeicherte Anwesenheitsdatensatz korrigiert um die Delta-Veränderungen herangezogen (Schritt 2), wobei die zu zahlende Gebühr anhand der in der Datenbank des Bezahlautomaten 4 gespeicherten Gebühren- und Tarifinformationen berechnet wird (Schritt 3). Die Bezahltransaktion wird ebenfalls lokal in der Datenbank gespeichert (Schritt 4) und zu einem späteren Zeitpunkt, wenn der Bezahlautomat in einen online-Moduls übergeht, an den zentralen Server 1 übermittelt (Schritt 5), wo sie gespeichert wird (Schritt 6).

## Patentansprüche

1. Verfahren zum Betreiben von Bezahlautomaten eines ID-basierten Zugangskontrollsystems für ein Post-Payment-Szenario, bei dem beim Verlassen des vom Zugangskontrollsystem abgedeckten Gebietes die entsprechenden Gebühren zu entrichten sind, umfassend einen zentralen Server (1) und zumindest eine Zugangskontrollvorrichtung (5), über die IDs von Kundenmedien ausgelesen und an den zentralen Server (1) weitergeleitet werden, welcher anhand der ID den Zugang über die die ID übermittelnde Zugangskontrollvorrichtung (1) gewährt oder verweigert, wobei jede Zugangskontrollvorrichtung (5) des Zugangskontrollsystems einer Zone zugeordnet ist, **dadurch gekennzeichnet, dass** jeder Bezahlautomat (4, 4', 4") des Zugangskontrollsystems einer Zone des Zugangskontrollsystems zugeordnet ist, wobei jede Zone eine eineindeutige Zonen-ID aufweist ,dass zu Beginn der Durchführung des Verfahrens für jede Zone ein im zentralen Server (1) erstellter Anwesenheitsdatensatz über einen oder mehrere Proxy-Server (2, 3) an die Bezahlautomaten (4, 4', 4") jeder Zone weitergeleitet und in den Bezahlautomaten (4, 4', 4") gespeichert wird, wobei anschließend in vorgegebenen oder definierbaren Zeitabständen oder wenn die im zentralen Server (1) erfassten Delta-Veränderungen, nämlich die IDs der Kundenmedien, die sich nicht mehr in der Zone befinden und die IDs der Kundenmedien, die hinzugekommen sind, in einer Zone eine vorgegebene Schwelle für die in diese Zone hinzugekommenen Kundenmedien und/oder für die in dieser Zone nicht mehr anwesenden Kundenmedien überschreiten, eine Datei enthaltend die Delta-Veränderungen zum Update des in den Bezahlautomaten (4, 4', 4") gespeicherten Anwesenheitsdatensatzes über einen oder mehrere Proxy-Server (2, 3) an die Bezahlautomaten (4, 4', 4") jeder Zone übertragen wird, dass der Anwesenheitsdatensatz jeder Zone als Parameter die Zonen-ID, die IDs der sich in der Zone befindlichen Kundenmedien, den Zeitpunkt der ersten Erfassung eines Kundenmediums in dieser Zone und/oder eine Dienstleistungs-ID aufweist, wobei für den Fall, dass lediglich eine Zone vorgesehen ist, die Zonen-ID entfällt und wobei, wenn nur eine Dienstleistung angeboten wird, die Dienstleistungs-ID entfällt, und wobei die neu hinzugekommenen Kundenmedien in einer Zone von der zumindest einen Zugangskontrollvorrichtung (5) dieser Zone und die nicht mehr in dieser Zone anwesenden Kundenmedien anhand der Transaktionsdaten der Bezahlautomaten (4, 4', 4") dieser Zone erfasst werden und dass wenn ein Bezahlautomat (4, 4', 4") in einer Zone offline ist, vom offline Bezahlautomaten der zuletzt mittels der Delta-Veränderungen upgedatete Anwesenheitsdatensatz dieser Zone herangezogen wird, um anhand der darin enthaltenen Daten und der im Bezahlautomaten gespeicherten Gebühren- und Tarifinformationen den zu entrichtenden Betrag zu berechnen, wobei anschließend der Bezahlvorgang durchgeführt wird und wobei, wenn sich der Bezahlautomat (4, 4', 4") zu einem späteren Zeitpunkt in einem online-Modus befindet, die Daten der offline-Transaktionen zum Zweck der Synchronisierung an den zentralen Server (1) übermittelt werden.

2. Verfahren zum Betreiben von Bezahlautomaten eines ID-basierten Zugangskontrollsystems für ein Post-Payment-Szenario nach Anspruch 1, **dadurch gekennzeichnet, dass** die Datei enthaltend die Delta-Veränderungen zum Update des in den Bezahlautomaten (4, 4', 4") gespeicherten Anwesenheitsdatensatzes über einen passiven Proxy-Server (2), der die Datei enthaltend die Delta-Veränderungen nach entsprechender Aufforderung seitens der Bezahlautomaten (4, 4', 4") an den jeweiligen Bezahlautomaten (4, 4', 4") übermittelt, an die Bezahlautomaten (4, 4', 4") jeder Zone übermittelt wird, wobei von den Bezahlautomaten (4, 4', 4") in vorgegebenen, definierbaren zeitlichen Intervallen die Datei enthaltend die Delta-Veränderungen vom Proxy-Server (2) angefordert wird, wobei diese Intervalle für alle Bezahlautomaten (4, 4', 4") einer Zone gleich sind, wobei die Dateien enthaltend die Delta-Veränderungen für jedes Intervall in einer Zone eine eindeutige Bezeichnung aufweisen und wobei, wenn die Datei enthaltend die Delta-Veränderungen für ein vorgegebenes Intervall zum ersten Mal von einem Bezahlautomaten (4) angefordert wird, die Anfrage vom Proxy-Server (2) an den zentralen Server (1) weitergeleitet wird und der zentrale Server (1) die Datei enthaltend die Delta-Veränderungen erstellt und an den Proxy-Server (2) übermittelt, welcher die Datei speichert und an den Bezahlautomaten (4) übermittelt und wobei, wenn anschließend die Datei enthaltend die Delta-Veränderungen für dasselbe zeitliche Intervall von einem weiteren Bezahlautomaten (4',, 4") in derselben Zone angefordert wird, die bereits im Proxy-Server (2) gespeicherte Datei für dieses Intervall aufgerufen und an den Bezahlautomaten (4', 4") übermittelt wird.

3. Verfahren zum Betreiben von Bezahlautomaten eines ID-basierten Zugangskontrollsystems für ein Post-Payment-Szenario nach Anspruch 1 **dadurch gekennzeichnet, dass** die Datei enthaltend die Delta-Veränderungen zum Update des in den Bezahlautomaten (4, 4', 4") gespeicherten Anwesenheitsdatensatzes über einen aktiven Proxy-Server (2) an die Bezahlautomaten (4, 4', 4") jeder Zone übermittelt wird, welcher ohne Steuerbefehle, die von einem Bezahlautomaten (4, 4', 4") generiert worden sind, in vorgegebenen oder definierbaren Abständen eine Verbindung zum zentralen Server (1) aufbaut, um die Datei enthaltend die Delta-Veränderungen anzufordern, zwischen zu speichern und an die Bezahlautomaten zu übermitteln.

## Claims

1. A method for operating payment machines of an ID-based access control system for a post-payment scenario, in which the corresponding fees are to be paid when leaving the area covered by the access control system, comprising a central server (1) and at least one access control device (5), via which IDs of customer media are read and forwarded to the central server (1), which, on the basis of the ID, grants or denies access via the access control device (1) transmitting the ID, wherein each access control device (5) of the access control system is assigned to a zone, **characterized in that** each payment machine (4, 4', 4") of the access control system is assigned to a zone of the access control system, each zone having a unique zone ID, that when beginning to carry out the method for each zone a presence database created in the central server (1) is forwarded via one or more proxy servers (2, 3) to the payment machines (4, 4', 4") of each zone and stored in the payment machines (4, 4', 4"), wherein thereafter at predetermined or definable intervals or when the delta changes recorded in the central server (1), namely the IDs of the customer media that are no longer present in the zone and the IDs of the customer media that have been added, in a zone exceed a predefined threshold for the customer media added to this zone and/or for the customer media no longer present in this zone, a file containing the delta changes is transmitted via one or more proxy servers (2, 3) to the payment machines (4, 4', 4") of each zone to update the presence database stored in the payment machines (4, 4', 4"), that the presence database of each zone has as parameters the zone ID, the IDs of the customer media present in the zone, the time of the first recording of a customer medium **in that** zone and/or a service ID, wherein in the event that only one zone is provided the zone ID is omitted and wherein if only one service is offered the service ID is omitted, and wherein the newly added customer media in a zone are recorded by the at least one access control device (5) of that zone and the customer media no longer present **in that** zone are recorded on the basis of the transaction data of the payment machines (4, 4', 4") of that zone and that if a payment machine (4, 4', 4") in a zone is offline, the offline payment machine uses the presence database of this zone most recently updated by means of the delta changes to calculate the amount to be paid on the basis of the data contained in said database and the fees and tariff information stored in the payment machine, the payment process then being carried out, and wherein if the payment machine (4, 4', 4") later returns to an online mode, the data from the offline transactions are transferred to the central server (1) for synchronization purposes.

2. The method for operating payment machines of an ID-based access control system for a post-payment scenario according to Claim 1, **characterized in that** the file containing the delta changes for updating the presence database stored in the payment machines (4, 4', 4") is sent to the payment machines (4, 4', 4") of each zone via a passive proxy server (2), which sends the file containing the delta changes to the respective payment machines (4, 4', 4") upon an appropriate request by the payment machines (4, 4', 4"), wherein the payment machines (4, 4', 4") request the file containing the delta changes from the proxy server (2) at predefined, definable time intervals, these intervals being the same for all payment machines (4, 4', 4") of a zone, wherein the files containing the delta changes have a unique identifier for each interval in a zone, and wherein when the file containing the delta changes for a given interval is requested by a payment machine (4) for the first time, the request is forwarded from the proxy server (2) to the central server (1) and the central server (1) creates the file containing the delta changes and sends it to the proxy server (2), which stores the file and sends it to the payment machine (4) and wherein, if the file containing the delta changes for the same time interval is subsequently requested by another payment machine (4, 4") in the same zone, the file already stored in the proxy server (2) for that interval is retrieved and sent to the payment machine (4', 4").

3. The method for operating payment machines of an ID-based access control system for a post-payment scenario according to Claim 1, **characterized in that** the file containing the delta changes to update the presence database stored in the payment machines (4, 4', 4") is transmitted via an active proxy server (2) to the payment machines (4, 4', 4") of each zone, which establishes a connection to the central server (1) at specified or definable intervals without control commands generated by a payment machine (4, 4', 4"), in order to request the file containing the delta changes, to store it temporarily and transfer it to the payment machines.

## Revendications

1. Procédé opérationnel pour des terminaux de paiement d'un système de contrôle d'accès sur base d'ID pour un scénario de post paiement, lors duquel, lorsque l'on quitte le secteur couvert par le système de contrôle d'accès, les taxes correspondantes doivent être payées, comprenant un serveur (1) centralisé et au moins un dispositif de contrôle d'accès (5), via lequel des ID de supports clients sont lus et retransmis au serveur (1) centralisé, qui à l'aide de l'ID autorise ou refuse l'accès via le dispositif de contrôle d'accès (1) transmettant l'ID, chaque dispositif de contrôle d'accès (5) du système de contrôle d'accès étant associé à une zone, **caractérisé en ce que** chaque terminal de paiement (4, 4', 4") du système de contrôle d'accès est associé à une zone du système de contrôle d'accès, chaque zone comportant un ID de zone univoque, **en ce qu'**en début de réalisation du procédé, pour chaque zone, un ensemble de données de présence créé dans le serveur (1) centralisé via un ou plusieurs serveurs proxy (2, 3) est retransmis aux terminaux de paiement (4, 4', 4") de chaque zone et mémorisé dans les terminaux de paiement (4, 4', 4"), par la suite, dans des intervalles de temps prédéfinis ou définissables ou lorsque les variations de delta détectées dans le serveur (1) centralisé, à savoir les ID des supports clients qui ne se trouvent plus dans la zone et les ID des supports clients qui se sont rajoutés dépassent dans une zone un seuil prédéfini pour les supports clients qui se sont rajoutés dans ladite zone et/ou pour les supports clients qui ne sont plus présents dans ladite zone, un fichier contenant les variations de delta étant transmis via un ou plusieurs serveurs proxy (2, 3) aux terminaux de paiement (4, 4', 4") de chaque zone, pour la mise à jour des ensembles de données de présence mémorisés dans les terminaux de paiement (4, 4', 4"), **en ce que** l'ensemble de données de présence de chaque zone comporte en tant que paramètres les ID de zones, les ID des supports clients se trouvant dans la zone, le moment de la première détection d'un support clients dans ladite zone et/ou un ID d'une prestation de service, pour le cas où uniquement une zone est prévue, l'ID de zones étant caduc, et si seule une prestation de service est proposée, l'ID de prestation de service étant caduc, et les supports clients nouvellement ajoutés dans une zone étant détectés par l'au moins un dispositif de contrôlé d'accès (5) de ladite zone et les supports clients qui ne sont plus présents dans ladite zone étant détectés à l'aide des données transactionnelles des terminaux de paiement (4, 4', 4") de ladite zone, et **en ce que** lorsqu'un terminal de paiement (4, 4', 4") dans une zone est hors ligne, le terminal de paiement hors ligne mettant à contribution l'ensemble de données de présence de ladite zone mis à jour en dernier lieu au moyen des variations de delta, pour calculer le montant qui doit être payé, à l'aide des données qu'il contient et des informations de taxes et de tarifs mémorisés dans les terminaux de paiement, par la suite, l'opération de paiement étant réalisé et si à un moment ultérieur, le terminal de paiement (4, 4', 4") se trouve en un mode en ligne, les données des transactions hors ligne étant transmises à des fins de synchronisation au serveur (1) centralisé.

2. Procédé opérationnel pour des terminaux de paiement d'un système de contrôle d'accès sur base d'ID pour un scénario de post paiement selon la revendication 1, **caractérisé en ce que**, pour la mise à jour de l' ensemble de données de présence mémorisé dans les terminaux de paiement (4, 4', 4"), le fichier contenant les variations de delta est transmis via un serveur proxy (2), qui après une invitation correspondante de la part des terminaux de paiement (4, 4', 4"), transmet le fichier contenant les variations de delta au terminal de paiement (4, 4', 4") concerné aux terminaux de paiement (4, 4', 4") de chaque zone, les terminaux de paiement (4, 4', 4") demandant au serveur proxy (2) à des intervalles temporaires prédéfinis, définissables le fichier contenant les variations de delta, lesdits Intervalles étant identiques pour tous les terminaux de paiement (4, 4', 4") d'une zone, les fichiers contenant les variations de delta présentant pour chaque intervalle dans une zone une désignation univoque et lorsque le fichier contenant les variations de delta pour un intervalle prédéfini est demandé pour la première fois par un terminal de paiement (4), l'interrogation du serveur proxy (2) étant retransmise au serveur (1) centralisé et le serveur (1) centralisé créant le fichier contenant les variations de delta et le transmettant au serveur proxy (2), lequel mémorise le fichier et le transmet au terminal de paiement (4) et si par la suite, le fichier contenant les variations de delta est demandé pour le même intervalle de temps par un autre terminal de paiement (4', 4") dans la même zone, le fichier déjà mémorisé dans le serveur proxy (2) étant appelé pour ledit intervalle et transmis au terminal de paiement (4', 4").

3. Procédé opérationnel pour des terminaux de paiement d'un système de contrôle d'accès sur base d'ID pour un scénario de post paiement selon la revendication 1, **caractérisé en ce que** pour la mise à jour de l'ensemble de données de présence mémorisé dans les terminaux de paiement (4, 4', 4"), le fichier contenant les variations de delta est transmis via un serveur proxy (2) actif aux terminaux de paiement (4, 4', 4"), lequel sans ordres de commande qui ont été générés par un terminal de paiement (4, 4', 4"), établit à des écarts prédéfinis ou définissables une connexion avec le serveur (1) centralisé pour demander le fichier contenant les variations de delta, le placer en mémoire-tampon et les transmettre aux terminaux de paiement.
